# EUROPÄISCHE PATENTANMELDUNG

(11) **EP 3 610 977 A1**
(43) Veröffentlichungstag der Anmeldung: **19.02.2020**
(21) Anmeldenummer: 19183752.5
(22) Anmeldetag: 02.07.2019
(51) Int. Cl.: B23K 7/00, B23K 26/70, B23K 37/04

(54) **AUFLAGELEISTE UND WERKSTÜCKAUFLAGE ZUR LAGERUNG EINES WERKSTÜCKS UND VERFAHREN ZUR HERSTELLUNG EINER AUFLAGELEISTE UND EINER WERKSTÜCKAUFLAGE SOWIE VERFAHREN ZUR BEARBEITUNG EINES WERKSTÜCKS**

(30) Priorität: 13.08.2018 DE 102018213579
(71) Anmelder: Trumpf Sachsen GmbH, 01904 Neukirch (DE)
(72) Erfinder: SCHMIDT, Andreas, 02627 Hochkirch (DE); ZENKER, Hans-Georg, 01904 Neukirch/Lausitz (DE); THONIG, Harry, 01904 Neukirch/Lausitz (DE)
(74) Vertreter: Kohler Schmid Möbus Patentanwälte

(57) **Zusammenfassung**

Eine Auflageleiste (1) zur Lagerung eines Werkstücks während einer Bearbeitung des Werkstücks durch thermisches Trennen mittels eines auf das Werkstück gerichteten Trennstrahls ist an einer in einer Längsrichtung (2) der Auflageleiste (1) verlaufenden Werkstückseite (3) mit Auflagevorsprüngen (4) versehen, die in Längsrichtung (2) der Auflageleiste (1) unter Ausbildung von Vorsprung-Zwischenräumen (5) mit gegenseitigem Abstand aufeinander folgen. An einer von der Werkstückseite (3) abliegenden Unterseite wenigstens eines Auflagevorsprungs (4) weist die Auflageleiste (1) eine von dem Auflagevorsprung (4) zu der Werkstückseite (3) hin überdeckte Aussparung (7) auf, die sich in einer Querrichtung (6) der Auflageleiste (1) erstreckt. Der die Aussparung (7) überdeckende Auflagevorsprung (4) ist trennbar mit der restlichen Auflageleiste (1) verbunden und unter Öffnen der Aussparung (7) zu der Werkstückseite (3) hin aus dem Verbund der Auflageleiste (1) trennbar.

Eine Werkstückauflage umfasst eine Mehrzahl von Auflageleisten (1) der vorgenannten Art, wobei zu der Werkstückseite (3) hin offene Aussparungen (7) dort vorgesehen sind, wo bei der späteren Werkstückbearbeitung der Trennstrahl eine Bearbeitungsposition einnimmt.

Die Herstellung von Auflageleisten (1) der vorgenannten Art und die Herstellung der vorgenannten Werkstückauflage sind in die spätere Werkstückbearbeitung integriert.

## Beschreibung

Die Erfindung betrifft
- eine Auflageleiste zur Lagerung eines Werkstücks während einer Bearbeitung des Werkstücks durch thermisches Trennen mittels eines auf das Werkstück gerichteten Trennstrahls, wobei die Auflageleiste eine in einer Längsrichtung der Auflageleiste verlaufende Werkstückseite mit Auflagevorsprüngen aufweist, die in Längsrichtung der Auflageleiste unter Ausbildung von Vorsprung-Zwischenräumen mit gegenseitigem Abstand aufeinander folgen,
- ein Verfahren zur Herstellung einer Auflageleiste der vorgenannten Art, im Rahmen dessen ein plattenartiger Werkstückstreifen an einer in einer Längsrichtung des Werkstückstreifens verlaufenden Seite durch trennende Bearbeitung mit Auflagevorsprüngen und Vorsprung-Zwischenräumen versehen wird, die in Längsrichtung des Werkstückstreifens aufeinander folgen,
- ein Verfahren zur Herstellung einer Werkstückauflage zur Lagerung eines Werkstücks während einer Werkstückbearbeitung durch thermisches Trennen mittels eines auf das Werkstück gerichteten Trennstrahls unter Relativbewegung des Werkstücks und des Trennstrahls in Querrichtung des Trennstrahls und damit verbundener Überführung des Trennstrahls in wenigstens eine Bearbeitungsposition, wobei eine für die Werkstückauflage vorgesehene Tragstruktur mit mehreren Auflageleisten derart bestückt wird, dass die Auflageleisten senkrecht zu Längsebenen der Auflageleisten voneinander beabstandet sind, die durch eine Längsrichtung und eine senkrecht zu der Längsrichtung verlaufende Querrichtung der Auflageleisten aufgespannt werden und wobei wenigstens ein an einer Bearbeitungsposition des Trennstrahls angeordneter Auflagevorsprung zumindest einer Auflageleiste durch trennende Bearbeitung der Auflageleiste aus dem Verbund der Auflageleiste getrennt wird,
- eine Werkstückauflage zur Lagerung eines Werkstücks während einer Werkstückbearbeitung durch thermisches Trennen mittels eines auf das Werkstück gerichteten Trennstrahls unter Relativbewegung des Werkstücks und des Trennstrahls in Querrichtung des Trennstrahls und damit verbundener Überführung des Trennstrahls in wenigstens eine Bearbeitungsposition, mit einer Tragstruktur und mehreren an der Tragstruktur vorgesehenen Auflageleisten, die senkrecht zu Längsebenen der Auflageleisten voneinander beabstandet sind, wobei die Längsebenen der Auflageleisten durch eine Längsrichtung und eine senkrecht zu der Längsrichtung der Auflageleisten verlaufende Querrichtung der Auflageleisten aufgespannt werden und wobei die Auflageleisten eine in Längsrichtung der Auflageleisten verlaufende Werkstückseite mit Auflagevorsprüngen aufweist, die in Längsrichtung der Auflageleisten unter Ausbildung von Vorsprung-Zwischenräumen mit gegenseitigem Abstand aufeinander folgen sowie
- ein Verfahren zur Bearbeitung eines Werkstücks durch thermisches Trennen mittels eines auf das Werkstück gerichteten Trennstrahls unter Relativbewegung des Werkstücks und des Trennstrahls in Querrichtung des Trennstrahls und damit verbundener Überführung des Trennstrahls in wenigstens eine Bearbeitungsposition, wobei eine Werkstückauflage für das zu bearbeitende Werkstück bereitgestellt und das Werkstück auf der Werkstückauflage gelagert wird, ehe das Werkstück an der oder den Bearbeitungspositionen des Trennstrahls trennend bearbeitet wird.

Werkstücke wie etwa Bleche sind bei der thermisch trennenden Bearbeitung mittels eines Trennstrahls, beispielsweise beim Plasma- oder Laserschneiden, auf einer Werkstückauflage gelagert, die mehrere nebeneinander angeordnete und zumeist parallel zueinander verlaufende Auflageleisten umfasst. Die Auflageleisten sind mit in Längsrichtung der Auflageleisten voneinander beabstandeten Auflagespitzen versehen, auf denen das betreffende Werkstück bei der Bearbeitung punktuell aufliegt. Wird ein Werkstück im Bereich einer Auflagespitze bearbeitet, so besteht trotz der punktförmigen Abstützung des Werkstücks an der Auflagespitze die Gefahr, dass sich bearbeitungsbedingt aufgeschmolzenes Material des Werkstücks und/oder bei der Bearbeitung gebildete Schlacke an der Auflagespitze ablagert und ein Anbacken des Werkstücks an der Werkstückauflage bewirkt. Derartige Anbackungen erschweren das sich an die trennende Bearbeitung anschließende Entladen des Werkstücks von der Werkstückauflage. Außerdem beeinträchtigen Anbackungen der beschriebenen Art die Qualität des bearbeiteten Werkstücks. Eine Qualitätsminderung des Bearbeitungsergebnisses kann außerdem dadurch verursacht werden, dass der Trennstrahl nach dem Durchdringen des Werkstücks auf die Werkstückunterseite reflektiert wird.

Zur Vermeidung der vorgenannten Behinderung des Prozessablaufs beim thermischen Trennen mittels eines Trennstrahls und zur Gewährleistung einer hohen Bearbeitungsqualität wird im gattungsgemäßen Stand der Technik gemäß WO 2007/134630 A1 eine Werkstückauflage im Vorfeld einer trennenden Werkstückbearbeitung konfiguriert, indem an den Auflageleisten der Werkstückauflage dreieckförmige Auflagespitzen, die bei der späteren Werkstückbearbeitung an einer Bearbeitungsposition des Trennstrahls angeordnet wären, abgebrochen oder umgebogen werden. Zu diesem Zweck ist im Falle des Standes der Technik eine Laserschneidmaschine an einem Tor der Einhausung ihres Arbeitsraumes mit einer Einstellvorrichtung versehen, die vor einer schneidenden Werkstückbearbeitung von der noch nicht beladenen Werkstückauflage unterfahren wird. An den Auflageleisten der Werkstückauflage stehen die Auflagespitzen zu der Einstellvorrichtung hin vor. Anschlagelemente der Einstellvorrichtung sind senkrecht zu der von der Werkstückauflage ausgebildeten Auflageebene in eine Anschlagposition oder in eine zurückgezogene Position zustellbar. Bei der von der Werkstückauflage relativ zu der Einstellvorrichtung ausgeführten Bewegung wird ein in die zurückgezogene Position zugestelltes Anschlagelement der Einstellvorrichtung von den Auflagespitzen an den Auflageleisten der Werkstückauflage kollisionsfrei passiert, während ein in die Anschlagposition überführtes Anschlagelement in die Bewegungsbahn der Auflagespitzen ragt und Auflagespitzen, die aufgrund der Bewegung der Werkstückauflage mit dem Anschlagelement kollidieren, abgebrochen oder umgebogen werden. Die Position der Anschlagelemente der Einstellvorrichtung wird in Abhängigkeit von dem späteren Schneidprozess derart eingestellt, dass diejenigen Auflagespitzen der Werkstückauflage entfernt oder umgebogen werden, die bei der anschließenden Werkstückbearbeitung unterhalb oder in unmittelbarer Nähe der Auftreffstelle des Laserschneidstrahls auf das Werkstück liegen würden.

Ausgehend von dem beschriebenen Stand der Technik besteht die Aufgabe der vorliegenden Erfindung darin, mit einem möglichst geringen fertigungstechnischen Aufwand eine auf einen konkreten Trennprozess abgestimmte Werkstückauflage bereitzustellen, die in besonderem Maße geeignet ist, Störungen des Trennprozesses und Qualitätseinbußen an dem trennend bearbeiteten Werkstück zu vermeiden.

Erfindungsgemäß gelöst wird diese Aufgabe durch die Auflageleiste gemäß Patentanspruch 1, die Werkstückauflage gemäß Patentanspruch 12, die Herstellungsverfahren gemäß Patentanspruch 9 und Patentanspruch 10 sowie durch das Bearbeitungsverfahren gemäß Patentanspruch 13.

Im Falle der Erfindung ist eine Auflageleiste vorgesehen, die in Querrichtung der Auflageleiste unterhalb wenigstens eines Auflagevorsprungs, vorzugsweise unterhalb mehrerer oder sämtlicher Auflagevorsprünge, eine im Ausgangszustand der Auflageleiste von dem Auflagevorsprung überdeckte und sich in Querrichtung der Auflageleiste erstreckende Aussparung aufweist. Gegenüber etwaigen benachbarten Vorsprung-Zwischenräumen ist die von dem Auflagevorsprung überdeckte Aussparung zu der von der Werkstückseite der Auflageleiste abliegenden Seite hin versetzt. Durch trennende Bearbeitung der Auflageleiste kann die Aussparung zu der Werkstückseite hin geöffnet werden. Zur trennenden Bearbeitung im Rahmen der Erfindung dient vorzugsweise ein Laser-Schneidstrahl.

Bei der Herstellung einer erfindungsgemäßen Auflageleiste wird ein plattenartiger Werkstückstreifen, vorzugsweise ein Blechstreifen, auf herkömmliche Weise trennend bearbeitet, insbesondere mittels eine Laser-Schneidstrahls geschnitten. An dem Werkstückstreifen werden zur Erzeugung der Auflagevorsprünge und der Aussparungen an der Unterseite der Auflagevorsprünge die betreffenden Werkstückbereiche ausgetrennt.

Das erfindungsgemäße Verfahren zur Bearbeitung von Werkstücken wird bei der Herstellung einer erfindungsgemäßen Werkstückauflage jedenfalls insoweit berücksichtigt, als zum Zeitpunkt der Herstellung einer erfindungsgemäßen Werkstückauflage die Positionen, welche der Trennstrahl bei der anschließenden Werkstückbearbeitung gegenüber der Werkstückauflage einnimmt und gegebenenfalls die Bahn, welche der Trennstrahl während des späteren Trennprozesses an der Werkstückauflage abfährt, bekannt sind. In einer numerischen Maschinensteuerung, die bei der Herstellung der Werkstückauflage zur Steuerung der trennenden Bearbeitung der Auflageleisten vorzugsweise verwendet wird, sind die Bearbeitungspositionen des Trennstrahls bei der sich an die Herstellung der Werkstückauflage anschließenden Werkstückbearbeitung hinterlegt.

Zur Erzeugung der erfindungsgemäßen Werkstückauflage werden an der oder den betroffenen Auflageleisten der oder diejenigen Auflagevorsprünge entfernt, die anschließend bei der trennenden Werkstückbearbeitung dem Trennstrahl an der Werkstückunterseite gegenüberliegen beziehungsweise von dem Trennstrahl überfahren würden. Nach dem Entfernen der Auflagevorsprünge sind an den Auflageleisten die an der Unterseite der Auflagevorsprünge angeordneten Aussparungen von der Werkstückseite her zugänglich. Die Aussparungen erstrecken sich in Querrichtung einer Auflageleiste über etwaige benachbarte Vorsprung-Zwischenräume hinaus.

Bei der sich an die Herstellung der erfindungsgemäßen Werkstückauflage anschließenden Werkstückbearbeitung können die nunmehr geöffneten Aussparungen den Trennstrahl und/oder bei der trennenden Werkstückbearbeitung erzeugte Materialschmelze und Schlacke aufnehmen und dadurch von dem Werkstück, insbesondere von der Werkstückunterseite, und auch von den umliegenden Auflagevorsprüngen fernhalten. Dadurch werden eine Verunreinigung des Werkstücks sowie eine unerwünschte Beaufschlagung der Werkstückunterseite durch den an den Auflageleisten reflektierten Trennstrahl ebenso verhindert wie ein Anbacken des Werkstücks an den verbliebenen Auflagevorsprüngen der erfindungsgemäßen Werkstückauflage.

Besondere Ausführungsarten der Auflageleiste und der Verfahren nach den unabhängigen Patentansprüchen ergeben sich aus den abhängigen Patentansprüchen 2 bis 8, 11, 14 und 15.

Ein an einer Auflageleiste zwischen einem Auflagevorsprung und dem Rand der von dem Auflagevorsprung überdeckten Aussparung stehen gebliebener Verbindungssteg lässt sich bei Bedarf zur Abstimmung der Auflageleiste und der mit der Auflageleiste versehenen Werkstückauflage auf eine konkrete Bearbeitungsaufgabe funktionssicher aus dem Verbund der Auflageleiste trennen (Patentanspruch 2).

Weist eine Aussparung an der Unterseite eines Auflagevorsprungs einer erfindungsgemäßen Auflageleiste eine geneigte Aussparungswand dergestalt auf, dass sich die Aussparung zu der Werkstückseite der Auflageleiste hin erweitert, so ist sichergestellt, dass der bei der Bearbeitung eines auf der Auflageleiste gelagerten Werkstücks in die Aussparung eintauchende Trennstrahl und/oder etwaige von der Werkstückseite her in die Aussparung aufgegebene Materialschmelze oder Schlacke nicht in Richtung auf die Unterseite des von den verbliebenen Auflagevorsprüngen unterfangenen Werkstücks reflektiert werden (Patentanspruch 3).

In diesem Sinne besonders wirksam sind Aussparungen an erfindungsgemäßen Auflageleisten, die in einer von der Längsrichtung und der Querrichtung der Auflageleiste aufgespannten Längsebene der Auflageleiste eine sich zu der Werkstückseite hin erweiternde Dreiecksform aufweisen (Patentanspruch 4).

Insbesondere für Bearbeitungsaufgaben, im Rahmen derer Werkstücke mit geringer Eigensteifigkeit, beispielsweise dünne Bleche, gelagert werden müssen, sind erfindungsgemäße Auflageleisten mit Auflagevorsprüngen vorgesehen, die eine flächige Werkstückauflage ausbilden (Patentanspruch 5).

Eine wirksame Werkstückunterstützung wird in Weiterbildung der Erfindung dadurch sichergestellt, dass die in Längsrichtung der Auflageleisten mit gegenseitigem Abstand aufeinander folgenden Auflagevorsprünge und Vorsprung-Zwischenräume in einer von der Längsrichtung und der Querrichtung der Auflageleiste aufgespannten Längsebene der Auflageleiste eine Rechteckform aufweisen (Patentanspruch 6).

Eine besonders flexible Anpassung einer Auflageleiste und einer mit der Auflageleiste versehenen Werkstückauflage an wechselnde Bearbeitungsaufgaben ermöglicht die Erfindungsbauart gemäß Patentanspruch 7. In zwei in Querrichtung der Auflageleiste übereinander angeordneten Ebenen ist die Auflageleiste einerseits mit einer Mehrzahl von in Längsrichtung der Auflageleiste aufeinander folgenden Auflagevorsprüngen und Vorsprung-Zwischenräumen und andererseits mit einer entsprechenden Anzahl von Aussparungen versehen, die bei Bedarf durch Entfernen eines Auflagevorsprungs zu der Werkstückseite hin geöffnet werden können. Vorzugsweise liegen die Auflagevorsprünge und Vorsprung-Zwischenräume der werkstückseitigen Lage der Auflageleiste einerseits und die Aussparungen der werkstückfernen Lage der Auflageleiste andererseits jeweils in Querrichtung der Auflageleiste auf einer Höhe.

In weiterer Ausgestaltung der Erfindung ist ausweislich Patentanspruch 8 insbesondere im Interesse einer möglichst einfachen Fertigung der Auflageleiste vorgesehen, dass die Auflageleiste einstückig und materialeinheitlich ausgebildet ist. Blechteile werden erfindungsgemäß als Auflageleisten bevorzugt.

Bei der sich an die Herstellung der erfindungsgemäßen Auflageleisten und der erfindungsgemäßen Werkstückauflage anschließenden Werkstückbearbeitung kann der Trennstrahl in Abhängigkeit von der konkreten Bearbeitungsaufgabe Bearbeitungspositionen punktuell anfahren, aber auch entlang einer sich als Aneinanderreihung von punktuellen Bearbeitungspositionen ergebenden Trennbahn bewegt werden. Entlang einer Trennbahn einer Werkstückbearbeitung werden im Rahmen einer Variante des erfindungsgemäßen Verfahrens zur Herstellung einer Werkstückauflage Auflagevorsprünge an Auflageleisten unter Erzeugung einer Aussparungskontur entfernt (Patentanspruch 11).

In bevorzugter Ausgestaltung des erfindungsgemäßen Verfahrens zur Bearbeitung eines Werkstücks werden zusätzlich zu der Werkstückauflage auch die Auflageleisten gefertigt, aus denen die Werkstückauflage hergestellt wird (Patentanspruch 14).

Im Interesse einer möglichst weitgehenden Vereinfachung des Fertigungsprozesses wird in weiterer bevorzugter Ausgestaltung des erfindungsgemäßen Verfahrens zur Bearbeitung eines Werkstücks eine zur Durchführung der Werkstückbearbeitung vorgesehene Bearbeitungsvorrichtung, beispielsweise die Schneideinheit einer Laserschneidmaschine, auch für die trennende Bearbeitung bei der Herstellung der erfindungsgemäßen Werkstückauflage und/oder für die trennende Bearbeitung bei der Herstellung von erfindungsgemäßen Auflageleisten eingesetzt (Patentanspruch 15).

Nachfolgend wird die Erfindung anhand beispielhafter schematischer Darstellungen näher erläutert. Es zeigen:
- Figur 1: eine Auflageleiste zur Lagerung eines Werkstücks bei der Bearbeitung durch thermisches Trennen in einem Ausgangszustand,
- Figur 2: die Auflageleiste gemäß Figur 1 nach der Anpassung an eine konkrete Bearbeitungsaufgabe,
- Figur 3: die Auflageleiste gemäß Figur 2 mit einem Werkstück bei der Bearbeitung des Werkstücks durch thermisches Trennen,
- Figuren 4 und 5: Darstellungen zur Veranschaulichung der Herstellung einer mit Auflageleisten gemäß den Figuren 1 bis 3 versehenen Werkstückauflage einer Laser-Schneidmaschine und
- Figur 6: die Laser-Schneidmaschine gemäß den Figuren 4 und 5 mit einer nach dem Verfahren gemäß den Figuren 4 und 5 hergestellten Werkstückauflage vor dem Beladen mit einem durch thermisches Trennen zu bearbeitenden Werkstück.

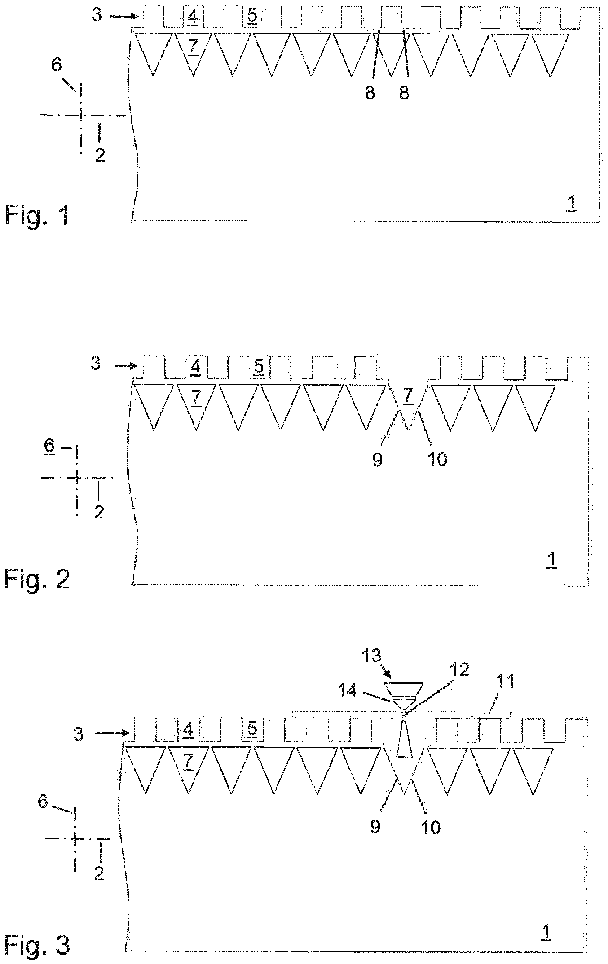

Eine in Figur 1 mit einer Teillänge dargestellte Auflageleiste 1 weist an einer in einer Längsrichtung 2 verlaufenden Werkstückseite 3 eine Mehrzahl von Auflagevorsprüngen 4 auf, die in Längsrichtung 2 der Auflageleiste 1 unter Ausbildung von Vorsprung-Zwischenräumen 5 mit gegenseitigem Abstand aufeinander folgen. In einer durch die Längsrichtung 2 und eine senkrecht zu der Längsrichtung 2 verlaufende Querrichtung 6 der Auflageleiste 1 aufgespannten Längsebene der Auflageleiste 1 weisen die Auflagevorsprünge 4 und die Vorsprung-Zwischenräume 5 eine Rechteckform auf. Die Auflageleiste 1 ist als einstückiges und materialeinheitliches Blechteil ausgebildet. Senkrecht zu der Zeichenebene der Figuren 1 bis 3 besitzt die Auflageleiste 1 in dem dargestellten Beispielsfall eine Dicke von 2 mm.

Werkstückseitig wird jeder der Auflagevorsprünge 4 durch eine ebene Stirnfläche mit Rechteckkontur begrenzt. Die Stirnflächen sämtlicher Auflagevorsprünge 4 bilden eine von den Vorsprung-Zwischenräumen 5 unterbrochene ebene Werkstück-Auflagefläche aus.

An der Unterseite jedes der Auflagevorsprünge 4 ist eine Aussparung 7 vorgesehen. Die Aussparungen 7 weisen in der Längsebene der Auflageleiste 1 eine sich zu der Werkstückseite 3 hin erweiternde Dreiecksform auf. Ebenso wie die Vorsprung-Zwischenräume 5 sind die Aussparungen 7 senkrecht zu der Längsebene der Auflageleiste 1 durchgängig.

Die Auflagevorsprünge 4 und die Vorsprung-Zwischenräume 5 bilden eine werkstückseitige Lage der Auflageleiste 1 aus, die Aussparungen 7 eine werkstückferne Lage der Auflageleiste 1. In Querrichtung 6 der Auflageleiste 1 liegen die Auflagevorsprünge 4 und die Vorsprung-Zwischenräume 5 einerseits und die Aussparungen 7 andererseits jeweils auf einer Höhe. Ebenso wie die Auflagevorsprünge 4 und die Vorsprung-Zwischenräume 5 stimmen auch die Aussparungen 7 der Auflageleiste 1 hinsichtlich ihrer Geometrie miteinander überein.

Zu der Werkstückseite 3 hin werden die Aussparungen 7 durch den jeweils zugeordneten Auflagevorsprung 4 überdeckt. In der senkrechten Projektion in der Querrichtung 6 der Auflageleiste 1 liegen die Auflagevorsprünge 4 innerhalb der Aussparungen 7. In der Längsrichtung 2 beidseits eines Auflagevorsprungs 4 erstreckt sich jeweils ein Verbindungssteg 8, der bis zu dem Rand der dem Auflagevorsprung 4 zugeordneten Aussparung 7 reicht. Über die beiden Verbindungsstege 8 ist jeder der Auflagevorsprünge 4 mit der restlichen Auflageleiste 1 verbunden.

Durch eine nachstehend im Einzelnen beschriebene thermisch trennende Bearbeitung der im Ausgangszustand gemäß Figur 1 befindlichen Auflageleiste 1 wird die Auflageleiste 1 bei Bedarf auf eine konkrete nachfolgende Werkstückbearbeitung abgestimmt. In einem auf eine konkrete Bearbeitungsaufgabe abgestimmten Zustand ist die Auflageleiste in Figur 2 dargestellt.

Zur Modifizierung der Auflageleiste 1 im Ausgangszustand wird an einer definierten Stelle der Auflageleiste 1 ein Auflagevorsprung 4 durch trennende Bearbeitung der Verbindungsstege 8 zwischen dem Auflagevorsprung 4 und der restlichen Auflageleiste 1 entfernt. Die zuvor durch den Auflagevorsprung 4 zu der Werkstückseite 3 der Auflageleiste 1 hin überdeckte Aussparung 7 wird durch die Trennung des Auflagevorsprungs 4 aus dem Verbund der Auflageleiste 1 zu der Werkstückseite 3 hin geöffnet. An den Dreiecksseiten der Aussparung 7 ausgebildete Aussparungswände 9, 10 verlaufen derart gegen die Querrichtung 6 der Auflageleiste 1 geneigt, dass sich die Aussparung 7 zu der Werkstückseite 3 der Auflageleiste 1 hin erweitert.

Ausweislich Figur 3 dient die Auflageleiste 1 zur Lagerung eines Werkstücks, im dargestellten Beispielsfall eines Blechs 11, während einer Bearbeitung des Blechs 11 durch thermisches Trennen mittels eines Trennstrahls, vorliegend mittels eines andeutungsweise dargestellten Laser-Schneidstrahls 12. Der Laser-Schneidstrahl 12 erweitert sich unterhalb des Blechs 11 kegelartig.

Bei der trennenden Bearbeitung der Auflageleiste 1 im Ausgangszustand wurde derjenige Auflagevorsprung 4 der Auflageleiste 1 entfernt, der bei der Bearbeitung des Blechs 11 von einem als Bearbeitungsvorrichtung vorgesehenen herkömmlichen Laser-Schneidkopf 13 überfahren worden wäre. Von dem Laser-Schneidkopf 13 ist in Figur 3 lediglich die Laserdüse 14 zu erkennen.

In dem Zustand gemäß den Figuren 2 und 3 bildet die Auflageleiste 1 trotz des Fehlens eines ursprünglich vorhandenen Auflagevorsprungs 4 immer noch eine großflächige Auflage für das Blech 11 aus. In dem Zustand gemäß den Figuren 2 und 3 ist die Auflageleiste 1 folglich nach wie vor in der Lage, auch wenig eigensteife Werkstücke, beispielsweise Dünnbleche, mit einem definierten ebenen Verlauf zu lagern.

Nachdem die werkstückseitig offene Aussparung 7 unterhalb der Bearbeitungsposition des Laser-Schneidstrahls 12 angeordnet ist und sich gegenüber den in der Längsrichtung 2 der Auflageleiste 1 benachbarten Vorsprung-Zwischenräumen 5 in Querrichtung der Auflageleiste 1 zu der von der Werkstückseite 3 abliegenden Seite der Auflageleiste 1 hin erstreckt, kann der Laser-Schneidstrahl 12 ohne die Auflageleiste 1 zu beschädigen in die Aussparung 7 eintauchen. Von den geneigten Aussparungswänden 9, 10 wird der Laser-Schneidstrahl 12 zur Seite hin reflektiert. Der reflektierte Laser-Schneidstrahl 12 wird folglich von der Unterseite des Blechs 11 ferngehalten. Außerdem gelangen bearbeitungsbedingt gebildete Materialschmelze des Blechs 11 und bearbeitungsbedingt anfallende Schlacke in die zu der Werkstückseite 3 der Auflageleiste 1 hin offene Aussparung 7. Auch die Materialschmelze und die Schlacke werden von den geneigten Aussparungswänden 9, 10 derart abgelenkt, dass sie nicht an die Unterseite des Blechs 11 gelangen. Auf diese Art und Weise ist an dem bearbeiteten Blech 11 eine hohe Bearbeitungsqualität gesichert.

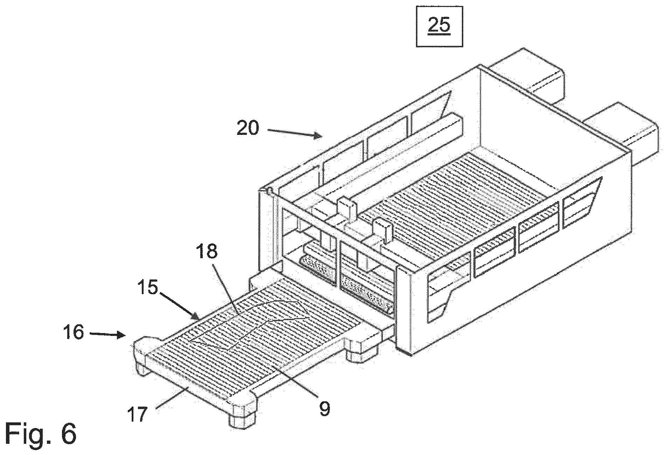

Die Auflageleiste 1 ist gemeinsam mit weiteren Auflageleisten 1 Teil einer Werkstückauflage 15, wie sie in Figur 6 als Palette an einem herkömmlichen Palettenwechsler 16 gezeigt ist.

An einer als Palettenrahmen 17 ausgebildeten Tragstruktur der Werkstückauflage 15 sind die Auflageleisten 1 mit gegenseitigem Abstand senkrecht zu ihren Längsebenen angeordnet. Eine in Figur 6 erkennbare Aussparungskontur 18 wird von werkstückseitig offenen Aussparungen 7 an den betroffene Auflageleisten 1 gebildet. Die Position und der Verlauf der Aussparungskontur 18 an der Werkstückauflage 15 bilden die Position und den Verlauf der von dem Laser-Schneidkopf 13 beziehungsweise dem Laser-Schneidstrahl 12 bei der Bearbeitung des Blechs 11 abgefahrenen Trenn- beziehungsweise Schneidbahn ab.

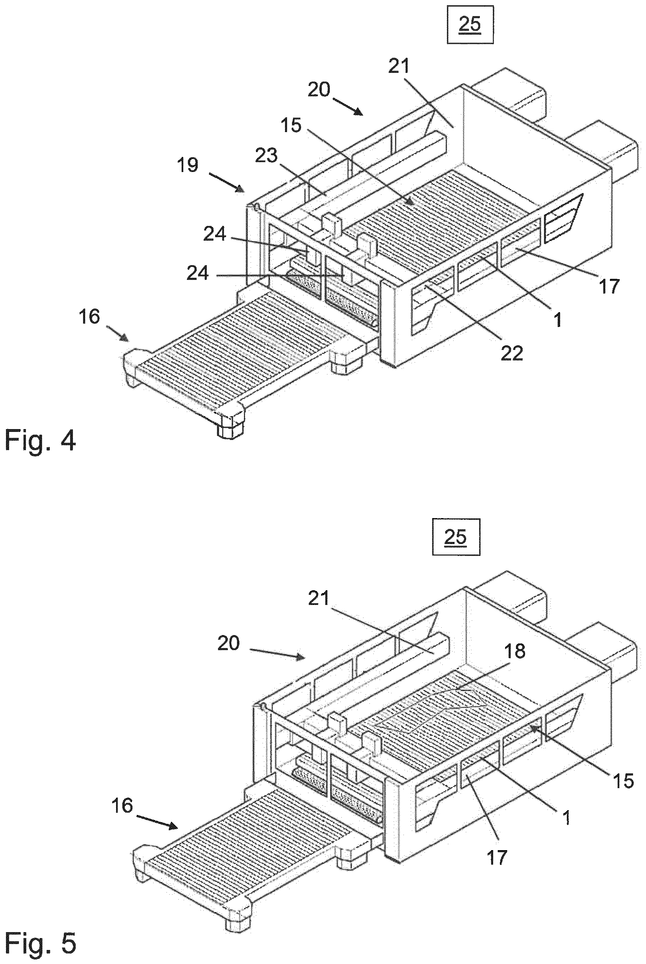

Die Herstellung der Werkstückauflage 15 ist in den Figuren 4 und 5 veranschaulicht.

Der Palettenwechsler 16 ist nahe einer Einhausung 19 einer als Flachbettmaschine ausgeführten Laser-Schneidmaschine 20 herkömmlicher Bauart platziert. In einem Arbeitsraum 21 im Innern der Einhausung 19 ist in gewohnter Weise ein Portal-Querträger 22 entlang einer Längsführung 23 bewegbar. Längs des Portal-Querträgers 22 verfahren in dem dargestellten Beispielsfall zwei Laser-Schneideinheiten 24, von denen eine den in Figur 3 andeutungsweise dargestellten Laser-Schneidkopf 13 aufweist.

Eine in den Figuren 4 bis 6 angedeutete numerische Maschinensteuerung 25 steuert alle wesentlichen Funktionen der Laser-Schneidmaschine 20. In der numerischen Maschinensteuerung 25 hinterlegt sind insbesondere die Bearbeitungspositionen und somit die Schneidbahn, welche der Laser-Schneidkopf 13 bei der schneidenden Bearbeitung des Blechs 11 mit dem Laser-Schneidstrahl 12 abfährt.

In Figur 4 ist die noch unbeladene Werkstückauflage 15 in den Arbeitsraum 21 der Laser-Schneidmaschine 20 eingefahren. Der Palettenrahmen 17 ist dabei mit Auflageleisten 1 bestückt, die sich in dem Ausgangszustand gemäß Figur 1 befinden.

Ausgehend von diesen Verhältnissen fährt die mit dem Laser-Schneidkopf 13 versehene Laser-Schneideinheit 24 an dem mit den Auflageleisten 1 im Ausgangszustand bestückten Palettenrahmen 17 die Schneidbahn der späteren Bearbeitung des Blechs 11 ab. Dabei werden in üblicher Weise Bewegungen des Laser-Schneidkopfs 13 Längs des Portal-Querträgers 22 und Bewegungen des Portal-Querträgers 22 entlang der Längsführung 23 einander überlagert.

Beim Abfahren der Schneidbahn der späteren Blechbearbeitung durchtrennt der Laser-Schneidstrahl 12 die Verbindungsstege 8 an denjenigen Auflagevorsprüngen 4 der im Ausgangszustand befindlichen Auflageleisten 1, die längs der Schneidbahn der späteren Blechbearbeitung angeordnet sind. Mittels einer üblichen Abstandsregelung, die bei der Bearbeitung des Blechs 11 zur Einstellung des in vertikaler Richtung zwischen der Laserdüse 14 und dem Blech 11 bestehenden Abstands dient, ist dabei eine fixe vertikale Position des Laserschneidkopfs 13 eingestellt. Die Lage des Fokus des Laser-Schneidstrahls 12 ist bei der trennenden Bearbeitung der Verbindungsstege 8 der auszutrennenden Auflagevorsprünge 4 auf ein Niveau unterhalb der Fokuslage bei der Bearbeitung des Blechs 11 eingestellt.

Durch die trennende Bearbeitung der Auflageleisten 1 im Ausgangszustand werden die unterhalb der betroffenen Auflagevorsprünge 4 angeordneten Aussparungen 7 zu der Werkstückseite 3 der Auflageleisten 1 hin geöffnet. Die aus dem Verbund der Auflageleisten 1 getrennten Auflagevorsprünge 4 werden unter Schwerkraftwirkung über die zwischen den Auflageleisten 1 bestehenden Zwischenräume abgeführt.

Als Ergebnis der trennenden Bearbeitung der Auflageleisten 1 im Ausgangszustand mittels des Laser-Schneidstrahls 12 ergibt sich die für die Bearbeitung des Blechs 11 konfigurierte Werkstückauflage 15, die in Figur 5 unmittelbar nach Beendigung der trennenden Bearbeitung der betroffenen Auflageleisten 1 im Innern des Arbeitsraums 21 der Laser-Schneidmaschine 20 gezeigt ist. Auflageleisten 1 der Werkstückauflage 15, welche der Laser-Schneidstrahl 12 bei der Bearbeitung des Blechs 11 nicht anfährt, sind im Ausgangszustand belassen worden.

Aus dem Innern des Arbeitsraums 21 der Laser-Schneidmaschine 20 wird die Werkstückauflage 15 nach ihrer Fertigstellung in gewohnter Weise vor die Einhausung 19 in diejenige Position bewegt, in welcher die Werkstückauflage 15 in Figur 6 gezeigt ist.

In der Position gemäß Figur 6 wird die Werkstückauflage 15 mit dem zu bearbeitenden Blech 11 beladen. Anschließend fährt die mit dem Blech 11 beladene Werkstückauflage 15 in den Arbeitsraum 21 der Laser-Schneidmaschine 20 ein. Dort folgt dann die trennende Bearbeitung des Blechs 11 entlang der in der numerischen Maschinensteuerung 25 hinterlegten Schneidbahn und somit auch entlang der an der Werkstückauflage 15 zuvor erstellten Aussparungskontur 18.

Der Laser-Schneidkopf 13 wird sowohl zur Herstellung der Werkstückauflage 15 als auch zur trennenden Bearbeitung des auf der Werkstückauflage 15 gelagerten Blechs 11 genutzt.

Darüber hinaus wurden mittels des Laser-Schneidkopfs 13 auch bereits die ursprünglichen Auflageleisten 1 gefertigt. Zu diesem Zweck wurden in dem Arbeitsraum 21 der Laser-Schneidmaschine 20 an einer entsprechenden Anzahl von Werkstück- beziehungsweise Blechstreifen mittels des Laser-Schneidstrahls 12 die Vorsprung-Zwischenräume 5 zur Erzeugung der Auflagevorsprünge 4 und außerdem auch die Aussparungen 7 freigeschnitten.

Gegenüber einer Maschinensteuerung allein für die trennende Bearbeitung des Blechs 11 ist die numerische Maschinensteuerung 25 um Programme zur Herstellung der Auflageleisten 1 und der Werkstückauflage 15 erweitert.

## Patentansprüche

1. Auflageleiste zur Lagerung eines Werkstücks (11) während einer Bearbeitung des Werkstücks (11) durch thermisches Trennen mittels eines auf das Werkstück (11) gerichteten Trennstrahls (12), wobei die Auflageleiste (1) eine in einer Längsrichtung (2) der Auflageleiste (1) verlaufende Werkstückseite (3) mit Auflagevorsprüngen (4) aufweist, die in Längsrichtung (2) der Auflageleiste (1) unter Ausbildung von Vorsprung-Zwischenräumen (5) mit gegenseitigem Abstand aufeinander folgen, **dadurch gekennzeichnet, dass** die Auflageleiste (1) an einer von der Werkstückseite (3) in einer senkrecht zu der Längsrichtung (2) verlaufenden Querrichtung (6) der Auflageleiste (1) abliegenden Unterseite wenigstens eines Auflagevorsprungs (4) eine von dem Auflagevorsprung (4) zu der Werkstückseite (3) hin überdeckte Aussparung (7) aufweist, die sich in Querrichtung (6) der Auflageleiste (1) erstreckt und dass der die Aussparung (7) überdeckende Auflagevorsprung (4) trennbar mit der restlichen Auflageleiste (1) verbunden und unter Öffnen der Aussparung (7) zu der Werkstückseite (3) hin aus dem Verbund der Auflageleiste (1) trennbar ist.

2. Auflageleiste nach Anspruch 1, **dadurch gekennzeichnet, dass** der die Aussparung (7) der Auflageleiste (1) überdeckende Auflagevorsprung (4) in der senkrechten Projektion in Querrichtung (6) der Auflageleiste (1) innerhalb der Aussparung (7) liegt und über einen zwischen dem Auflagevorsprung (4) und dem Rand der Aussparung (7) vorgesehenen Verbindungssteg (8) mit der restlichen Auflageleiste (1) verbunden ist und dass der Auflagevorsprung (4) durch trennende Bearbeitung des Verbindungsstegs (8) aus dem Verbund der Auflageleiste (1) trennbar ist.

3. Auflageleiste nach einem der vorhergehenden Ansprüche, **dadurch gekennzeichnet, dass** sich die Aussparung (7) der Auflageleiste (1) zu der Werkstückseite (3) der Auflageleiste (1) hin erweitert, indem die Aussparung (7) eine gegen die Querrichtung (6) der Auflageleiste (1) geneigte und vorzugsweise ebene Aussparungswand (9,10) aufweist.

4. Auflageleiste nach einem der vorhergehenden Ansprüche, **dadurch gekennzeichnet, dass** die Aussparung (7) in einer von der Längsrichtung (2) und der Querrichtung (6) der Auflageleiste (1) aufgespannten Längsebene der Auflageleiste (1) eine sich zu der Werkstückseite (3) der Auflageleiste (1) hin erweiternde Dreiecksform aufweist.

5. Auflageleiste nach einem der vorhergehenden Ansprüche, **dadurch gekennzeichnet, dass** wenigstens ein Auflagevorsprung (4) werkstückseitig eine flächige Werkstückauflage ausbildet.

6. Auflageleiste nach einem der vorhergehenden Ansprüche, **dadurch gekennzeichnet, dass** die in Längsrichtung (2) der Auflageleiste (1) mit gegenseitigem Abstand aufeinander folgenden Auflagevorsprünge (4) und Vorsprung-Zwischenräume (5) in einer von der Längsrichtung (2) und der Querrichtung (6) der Auflageleiste (1) aufgespannten Längsebene der Auflageleiste (1) eine Rechteckform aufweisen.

7. Auflageleiste nach einem der vorhergehenden Ansprüche, **dadurch gekennzeichnet, dass** die Auflageleiste (1) zwei in Längsrichtung (2) der Auflageleiste (1) verlaufende Lagen aufweist, von denen eine werkstückseitige Lage die Auflage-Vorsprünge (4) und die Vorsprung-Zwischenräume (5) und eine an der Unterseite der Auflage-Vorsprünge (4) und Vorsprung-Zwischenräume (5) angeordnete werkstückferne Lage von den Auflagevorsprüngen (4) überdeckte Aussparungen (7) aufweist.

8. Auflageleiste nach einem der vorhergehenden Ansprüche, **dadurch gekennzeichnet, dass** die Auflageleiste (1) einstückig und materialeinheitlich ausgebildet ist.

9. Verfahren zur Herstellung einer Auflageleiste (1) zur Lagerung eines Werkstücks (11) während einer Bearbeitung des Werkstücks (11) durch thermisches Trennen mittels eines auf das Werkstück (11) gerichteten Trennstrahls (12), wobei ein plattenartiger Werkstückstreifen an einer in einer Längsrichtung des Werkstückstreifens verlaufenden Seite durch trennende Bearbeitung mit Auflagevorsprüngen (4) und Vorsprung-Zwischenräumen (5) versehen wird, die in Längsrichtung (2) des Werkstückstreifens aufeinander folgen, **dadurch gekennzeichnet, dass** der Werkstückstreifen den Auflagevorsprüngen (4) in einer senkrecht zu der Längsrichtung verlaufenden Querrichtung des Werkstückstreifens benachbart mit wenigstens einer von einem Auflagevorsprung (4) überdeckten Aussparung (7) versehen wird, die sich in Querrichtung (6) des Werkstückstreifens erstreckt, wobei zwischen dem die Aussparung (7) überdeckenden Auflagevorsprung (4) und dem restlichen Werkstückstreifen eine Verbindung verbleibt.

10. Verfahren zur Herstellung einer Werkstückauflage (15) zur Lagerung eines Werkstücks (11) während einer Werkstückbearbeitung durch thermisches Trennen mittels eines auf das Werkstück (11) gerichteten Trennstrahls (12) unter Relativbewegung des Werkstücks (11) und des Trennstrahls (12) in Querrichtung des Trennstrahls (12) und damit verbundener Überführung des Trennstrahls (12) in wenigstens eine Bearbeitungsposition, wobei eine für die Werkstückauflage (15) vorgesehene Tragstruktur (17) mit mehreren Auflageleisten (1) derart bestückt wird, dass die Auflageleisten (1) senkrecht zu Längsebenen der Auflageleisten (1) voneinander beabstandet sind, die durch eine Längsrichtung (2) und eine senkrecht zu der Längsrichtung (2) verlaufende Querrichtung (6) der Auflageleisten (1) aufgespannt werden und wobei wenigstens ein an einer Bearbeitungsposition des Trennstrahls (12) angeordneter Auflagevorsprung (4) zumindest einer Auflageleiste (1) durch trennende Bearbeitung der Auflageleiste (1) aus dem Verbund der Auflageleiste (1) getrennt wird, **dadurch gekennzeichnet, dass** die für die Werkstückauflage (15) vorgesehene Tragstruktur (17) mit mehreren Auflageleisten (1) bestückt wird, von denen wenigstens eine gemäß einem der Patentansprüche 1 bis 8 ausgebildet ist und dass der an einer Bearbeitungsposition des Trennstrahls (12) angeordnete Auflagevorsprung (4) dieser Auflageleiste (1) durch trennende Bearbeitung der Auflageleiste (1) aus dem Verbund der Auflageleiste (1) getrennt wird unter Öffnen der Aussparung (7), die an der Unterseite des Auflagevorsprungs (4) angeordnet ist und die sich in Querrichtung (6) der Auflageleiste (1) erstreckt.

11. Verfahren zur Herstellung einer Werkstückauflage (15) gemäß Patentanspruch 10, wobei Bearbeitungspositionen des Trennstrahls (12) eine Trennbahn der Werkstückbearbeitung ausbilden, längs derer das Werkstück (11) und der Trennstrahl (12) relativ zueinander in Querrichtung des Trennstrahls (12) bewegt werden, **dadurch gekennzeichnet, dass** die längs der Trennbahn der Werkstückbearbeitung angeordneten Auflagevorsprünge (4) der Auflageleisten (1) durch trennende Bearbeitung der Auflageleisten (1) aus dem Verbund der Auflageleisten (1) getrennt werden unter Öffnen der Aussparungen (7), die an der Unterseite der Auflagevorsprünge (4) angeordnet sind und die sich in Querrichtung (6) der Auflageleiste (1) erstrecken.

12. Werkstückauflage zur Lagerung eines Werkstücks (11) während einer Werkstückbearbeitung durch thermisches Trennen mittels eines auf das Werkstück (11) gerichteten Trennstrahls (12) unter Relativbewegung des Werkstücks (11) und des Trennstrahls (12) in Querrichtung des Trennstrahls (12) und damit verbundener Überführung des Trennstrahls (12) in wenigstens eine Bearbeitungsposition, mit einer Tragstruktur (17) und mehreren an der Tragstruktur (17) vorgesehenen Auflageleisten (1), die senkrecht zu Längsebenen der Auflageleisten (1) voneinander beabstandet sind, wobei die Längsebenen der Auflageleisten (1) durch eine Längsrichtung (2) und eine senkrecht zu der Längsrichtung (2) der Auflageleisten (1) verlaufende Querrichtung (6) der Auflageleisten (1) aufgespannt werden und wobei die Auflageleisten (1) eine in Längsrichtung (2) der Auflageleisten (1) verlaufende Werkstückseite (3) mit Auflagevorsprüngen (4) aufweist, die in Längsrichtung (2) der Auflageleisten (1) unter Ausbildung von Vorsprung-Zwischenräumen (5) mit gegenseitigem Abstand aufeinander folgen, **dadurch gekennzeichnet, dass** wenigstens eine der Auflageleisten (1) an einer Bearbeitungsposition des Trennstrahls (12) eine werkstückseitig offene Aussparung (7) aufweist, die sich gegenüber einem der Aussparung (7) in der Längsrichtung (2) der Auflageleiste (1) benachbarten Vorsprung-Zwischenraum (5) in Querrichtung (6) der Auflageleiste (1) zu der von der Werkstückseite (3) abliegenden Seite der Auflageleiste (1) hin erstreckt.

13. Verfahren zur Bearbeitung eines Werkstücks (11) durch thermisches Trennen mittels eines auf das Werkstück (11) gerichteten Trennstrahls (12) unter Relativbewegung des Werkstücks (11) und des Trennstrahls (12) in Querrichtung des Trennstrahls (12) und damit verbundener Überführung des Trennstrahls (12) in wenigstens eine Bearbeitungsposition, wobei eine Werkstückauflage (15) für das zu bearbeitende Werkstück (11) bereitgestellt und das Werkstück (11) auf der Werkstückauflage (15) gelagert wird, ehe das Werkstück (11) an der oder den Bearbeitungspositionen des Trennstrahls (12) trennend bearbeitet wird, **dadurch gekennzeichnet, dass** die Werkstückauflage (15) zur Lagerung des Werkstücks (11) bereitgestellt wird, indem die Werkstückauflage (15) nach dem Verfahren gemäß Patentanspruch 10 oder Patentanspruch 11 hergestellt wird.

14. Verfahren zur Bearbeitung eines Werkstücks (11) gemäß Patentanspruch 13, **dadurch gekennzeichnet, dass** wenigstens eine Auflageleiste (1) für die Werkstückauflage (15) nach dem Verfahren gemäß Patentanspruch 9 hergestellt wird.

15. Verfahren zur Bearbeitung eines Werkstücks (11) gemäß Patentanspruch 13 oder Patentanspruch 14, **dadurch gekennzeichnet, dass** für die trennende Bearbeitung des Werkstücks (11) eine Bearbeitungsvorrichtung (13) verwendet wird, mittels derer bei der Herstellung der Werkstückauflage (15) die an der oder den Bearbeitungspositionen des Trennstrahls (12) angeordneten Auflagevorsprünge (4) der Auflageleisten (1) aus dem Verbund der Auflageleisten (1) getrennt worden sind und/oder mittels derer bei der Herstellung wenigstens einer Auflageleiste (1) der Werkstückstreifen trennend bearbeitet worden ist.
